Europäisches Patentamt

(19)    European Patent Office    (11) Publication number: **0 393 323**

Office européen des brevets                                          **A1**

(12)                    **EUROPEAN PATENT APPLICATION**

(21) Application number: **90103104.7**          (51) Int. Cl.⁵: **G01G 7/02**

(22) Date of filing: **17.02.90**

The title of the invention has been amended (Guidelines for Examination in the EPO, A-III, 7.3).

(30) Priority: **27.02.89 IT 1956689**

(43) Date of publication of application:
**24.10.90 Bulletin 90/43**

(84) Designated Contracting States:
**CH DE ES FR GB LI**

(71) Applicant: **CIBE S.P.A.**
**Viale Milano, 11**
**I-21047 Saronno (VA)(IT)**

(72) Inventor: **Negri, Emilio**
**Via Trenno, 136**
**I-20151 Milano(IT)**

(74) Representative: **Dr. Ing. A. Racheli & C.**
**Viale San Michele del Carso, 4**
**I-20144 Milano(IT)**

(54) **Mass transducer with electromagnetic compensation.**

(57) The subject of this invention is an electromagnetically compensated mass transducer comprising a fixed body (50), which supports a magnetic yoke, to which the load measuring lever (18) and the reference lever (22) are hinged and to which an additional Roberval parallelogram (51) is also attached, whose mobile end part (52) is connected to the principal parallelogram supplied with a plate for the load to be weighed, exclusively apt to the transfer of the pull of the principal parallelogram on the load measuring lever (18). The additional Roberval parallelogram is preferably not provided with micrometric regulation.

FIG. 5

EP 0 393 323 A1

This invention relates to a new electromagnetically compensated mass transducer.

Magnetically compensated balances, see for example patents CH No. 4543/79.3 and DE No. G 81 35 182.8 and single transducers, EP 0 206 333, have been known for a long time.

In the first two patents referred to, as in all industrial products on the market, the trasducer and the device supplied with the load bearing plate constitute an integrated unit which cannot be disassembled, particularly because it is difficult to join the two aforementioned units (see in particular patent DE 81 35 182.8).

The accuracy and good functioning of the balance are highly dependent on the method of connection of the transducer and the parallelogram which supports the weight, possibly equipped with a reduction lever. It is difficult to obtain the optimal condition, foreseeing the vertical application of the load, the absence of lateral or longitudinal forces and the absence of torsion, because of the construction tolerances of industrial products and this difficulty increases if the constructor of the balance buys the transducer to apply it to his products.

The aim of this invention is to solve the problems described above.

This aim is achieved by providing an additional Roberval parallelogram, to the mobile end part of which is attached the parallelogram supplied with the load weighing plate, the fixing points of said additional parallelogram being obtained directly from the fixed body of the transducer, which supports the magnetic yoke and the hinges of the lever.

Since the additional parallelogram is an integral part of the transducer, it can be extremely simple. There is no need for micrometrical regulation devices for the elimination of errors due to off-centre loads since it acts exclusively as an intermediary device between the transducer and the parallelogram which supports the loads.

Preferably the mass transducer according to this invention is provided with a device to block the lever bearing the sample load, comprising a fixed housing integral with the fixed body of the transducer and a rod sliding under the effect of a spring, in this housing; said rod can assume two different stable positions relative to the fixed housing, in each of which a pin provided on the rod engages with one of two notches provided in the fixed housing, in the lower position the rod rests on the sample weight and, consequently, blocks the reference lever.

The transducer of this invention offers the advantage of a reduction in assembly costs and guarantees the high accuracy of the balance.

The invention will be now described more in detail, referring to the attached drawings which illustrate a non-limiting example of an embodiment and in which:

Figure 1 shows a side view of the transducer;

Figure 2 shows a left-hand view compared to Figure 1;

Figure 3 shows an exploded perspective view of the transducer shown in the previous figures;

Figures 4 and 5 show respectively the scheme of a traditional balance and that of a balance according to this invention.

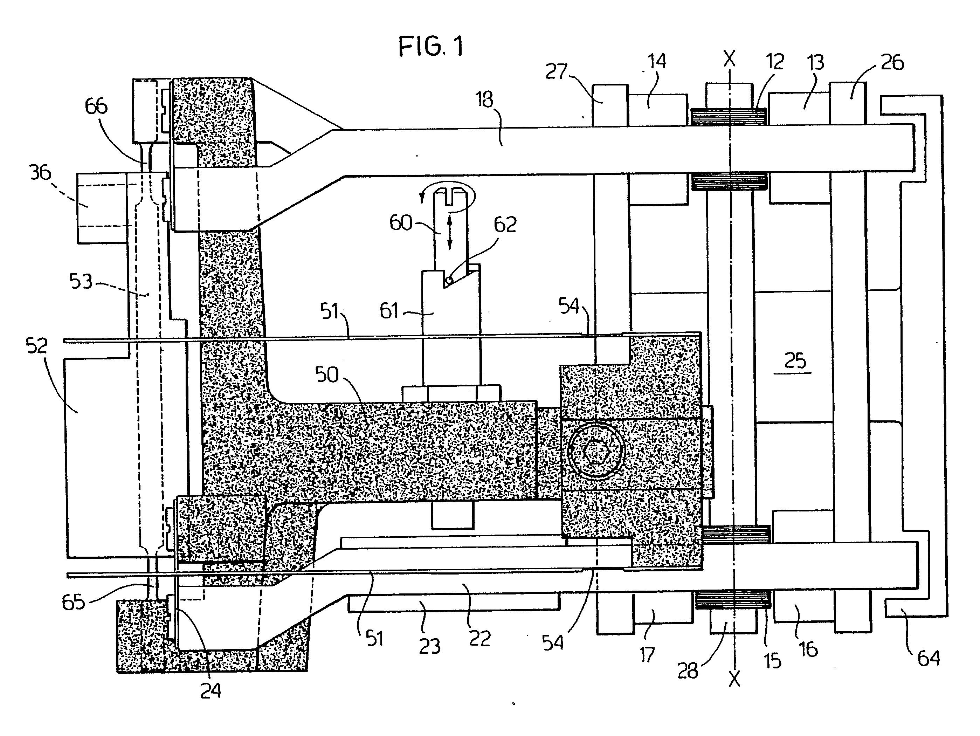

Figures 1 to 3 show a transducer comprising a load measuring coil 12, installed between magnets 13 and 14, and a reference coil 15 installed between magnets 16 and 17. To the coil 12 is connected the load measuring lever 18, which is hinged in 20. To the reference coil 15 is connected the reference lever 22, the fulcrum of which is set on the plate 24. To the reference lever 22 is fixed the reference mass or sample weight 23. The coil 12 is of the pancake thorium type with the largest dimension perpendicular to the winding axis X-X of the coil which is in the same direction of movement of the lever and the thrust of the coil.

Also coil 15 is disposed in the same way. The magnetic circuit has the form of a "wafer" constituted by two facing flat magnetic elements, 26 and 27 respectively, attached to the central plate 28 by one or more fixing devices 25. The two pairs of permanent magnets 16 and 17, 13 and 14 respectively, are arranged on the inside walls of the lateral plates, mounted in such a way as to form two symmetrical air gaps with respect to the central metal body 28 in which the coils 12 and 15 are housed. The magnets are arranged so as to ensure that each coil is immersed in an even magnetic field, directed perpendicularly to the largest surface of the coil. The magnetic yoke is supported by a body 50, to which the levers 22 and 18 are hinged. To the transducer body 50 is anchored a Roberval parallelogram, the plates of which are indicated by the number 51. The hinge points 54 of said plates 51 are obtained by thinning the latter. The number 53 indicates a tie rod between the additional Roberval parallelogram and lever 18.

The tie rod 53 is constituted by a rod whose extremities are welded into respective slots 34, 33 cut in the mobile part 52 of the additional Roberval parallelogram and in correspondence to the point of application of the load on lever 18. Immediately inside the welded extremities of the tie rod 53 there are buckles 65 and 66, respectively, in order to provide preferential zones of flexure in a plane parallel to the plane formed by the hinges 20 of the load measuring lever 18.

The plates 51 are fixed to the part 52 and the fixed body 50 by means of screws.

To the fixed body of the transducer 50 is integral a fixed housing 61 which accepts a sliding rod 60 which slides into it under the effect of a spring 63 (visible in Figure 3). The rod 60 has a pin 62 which engages selectively one of two notches provided at two different levels in the fixed housing 61. When the pin 62 of the rod 60 engages the lower notch, the lower end of said rod 60 rests against the sample weight 23, thus blocking the reference lever 22 against a lower stop 64 and not permitting it to rise.

With this transducer, the reduction lever of the device which supports the load (i.e. the Roberval parallelogram supplied with a load bearing plate which is not visible in the drawing) is not connected to the terminal part 33 of the load measuring lever 18, but is connected at point 36 to the mobile end part 52 of the small integrated Roberval parallelogram. The additional Roberval parallelogram does not require regulation because it eliminates only the lateral or longitudinal components which occur as a result of normal mechanical construction tolerances, so that the hinges 20 of the measuring lever are subjected to flexion only.

This arrangement increases the accuracy of the system by about one order of magnitude, particularly against thermal stresses, permitting the constructors of balances to employ these transducers with ease.

The device described above for blocking the reference lever 22 is provided with the aim of avoiding oscillations of this lever during transport of the balance.

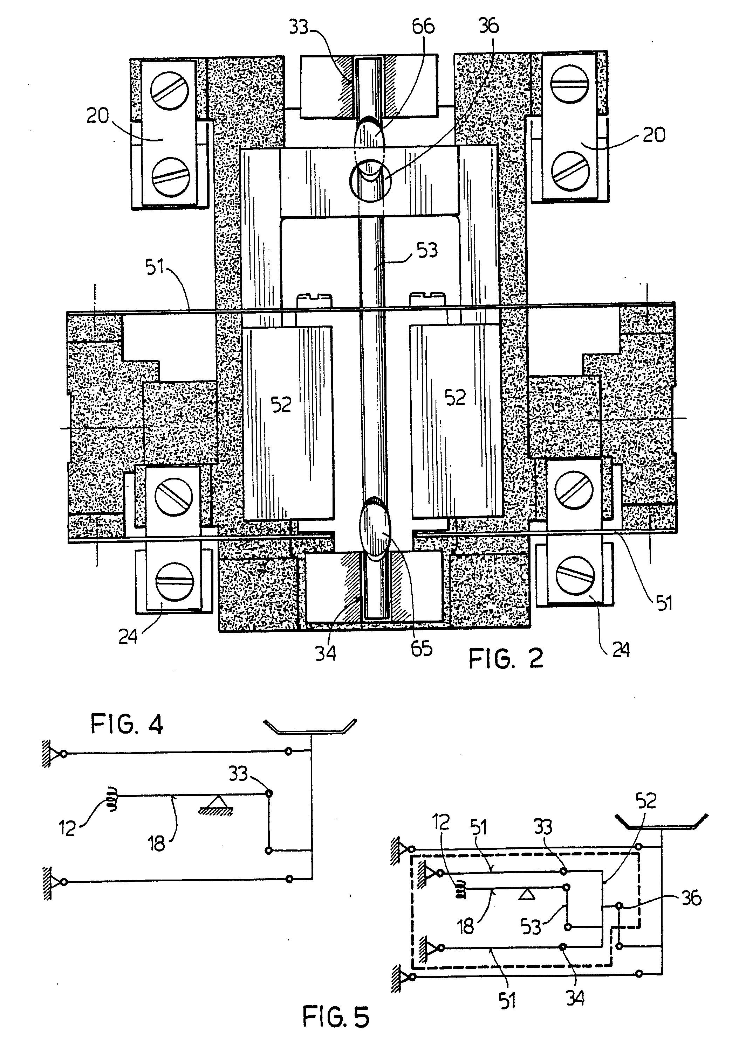

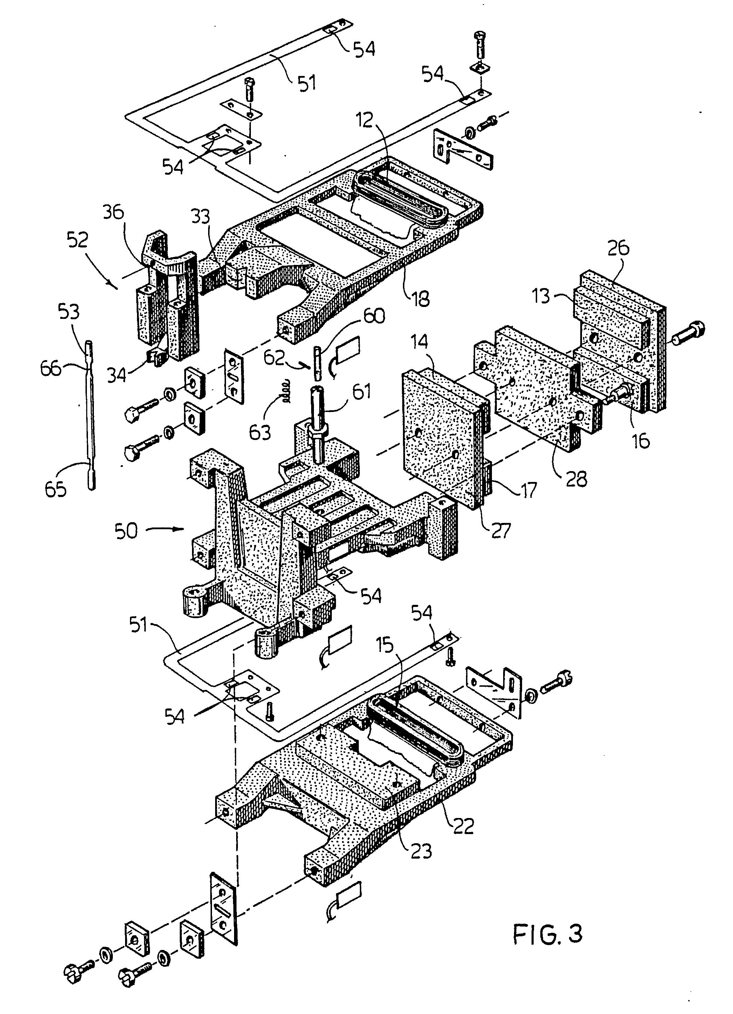

Figures 4 and 5 show the difference between the structural arrangement of a traditional balance with magnetic compensation (Figure 4) and that of a balance which includes a transducer of the type described above (Figure 5). To make this difference clearly understandable, the parts shown in schematic form in Figures 4 and 5 which are shown in the Figures 1 to 3 are marked with the same reference numerals. In Figure 5 the parts which constitute the subject of the invention are marked out by barred lines.182

## Claims

1. Electromagnetically compensated mass transducer comprising a fixed body (50) which supports a magnetic yoke and to which the load measuring lever (18) and eventually the reference lever (22) are hinged, characterized in that an additional Roberval parallelogram is fixed to the fixed body (50), to the mobile end part (52) of which is connected the principal parallelogram provided with a plate for the load to be weighed and serving exclusively for the transfer of the pull of the principal parallelogram to the load measuring lever (18), by means of a tie rod (53).

2. Transducer according to claim 1, characterized in that the tie rod (53) is constituted by a rod with the extremities welded into respective slots 34, 33 obtained in said mobile part (52) in correspondence to the point of application of the load on the lever (18), immediately inside the welded extremities of the tie rod (53), respective buckles (65, 66) being provided in order to determine zones of preferential flexure.

3. Transducer according to claim 1 or 2, characterized in that the additional Roberval parallelogram has no micrometric regulation device.

4. Transducer according to anyone of the claims from 1 to 3, characterized in that the hinges (54) of the additional Roberval parallelogram are obtained by thinning the levers (51) forming said parallelogram in appropriate areas.

5. Transducer according to anyone of the previous claims, characterized in that it comprises a device which blocks the reference lever.

6. Transducer according to claim 5, characterized in that the device which blocks the reference lever comprises a fixed housing (61) which is integral to the fixed body (50) of the transducer and a rod (60) sliding into said housing under the effect of a spring, said rod (60) being able to take up two stable positions with respect to the fixed housing (61), in each of which a pin (62) provided on the rod (60) engages one of two slots provided in the fixed housing, in the lower stable position the rod (60) rests on the sample weight (23) consequently blocking the reference lever.

FIG. 1

EP 0 393 323 A1

FIG. 2

FIG. 4

FIG. 5

FIG. 3

## DOCUMENTS CONSIDERED TO BE RELEVANT

EP 90103104.7

| Category | Citation of document with indication, where appropriate, of relevant passages | Relevant to claim | CLASSIFICATION OF THE APPLICATION (Int. Cl⁵) |
|---|---|---|---|
| X | CH - A5 - 591 684 (METTLER) <br> * Column 1, line 64 - column 3, line 4; column 3, line 30 - column 4, line 7; fig. * | 1,3,4 | G 01 G 7/02 |
| A | CH - A5 - 623 133 (METTLER) <br> * Fig. 1; abstract, paragraph 2 * | 1 | |
| D,A | EP - A1 - 0 206 333 (DATAPROCESS) <br> * Abstract; fig. 1,3 * | 1 | |
| D,A | DE - U1 - 8 135 182 (SARTORIUS) <br> * Claim 1; fig. 1-3 * | 1,2 | |

TECHNICAL FIELDS
SEARCHED (Int. Cl⁵)

G 01 G 7/00

The present search report has been drawn up for all claims

| Place of search | Date of completion of the search | Examiner |
|---|---|---|
| VIENNA | 18-05-1990 | BURGHARDT |